# EUROPÄISCHE PATENTSCHRIFT

(11) **EP 3 962 713 B1**
(45) Veröffentlichungstag und Bekanntmachung des Hinweises auf die Patenterteilung: **06.12.2023**
(21) Anmeldenummer: 20723385.9
(22) Anmeldetag: 30.04.2020
(51) Int. Cl.: B29C 64/129, B29C 64/264, B33Y 30/00, B33Y 10/00

(54) **3D-DRUCKVORRICHTUNG ZUR PHOTOPOLYMERISATION EINES PHOTOSENSITIVEN KUNSTHARZES DURCH EIN BELICHTUNGSMUSTER**
3D PRINTER FOR PHOTOPOLYMERIZING A PHOTOSENSITIVE PLASTIC RESIN USING A LIGHTING PATTERN
DISPOSITIF D'IMPRESSION 3D POUR LA PHOTOPOLYMÉRISATION D'UNE RÉSINE SYNTHÉTIQUE PHOTOSENSIBLE PAR UN MODÈLE D'EXPOSITION À LA LUMIÈRE

(30) Priorität: 03.05.2019 DE 102019206367
(43) Veröffentlichungstag der Anmeldung: 09.03.2022
(73) Patentinhaber: Audi AG, 85045 Ingolstadt (DE)
(72) Erfinder: KLUG, Markus, 85057 Ingolstadt (DE); MOLL, Tobias, 85055 Ingolstadt (DE); SCHEUCHENPFLUG, Johannes, 85107 Baar-Ebenhausen (DE)
(74) Vertreter: Hofstetter, Schurack & Partner
(86) Internationale Anmeldenummer: PCT/EP2020/062111
(87) Internationale Veröffentlichungsnummer: WO 2020/225122

(56) Entgegenhaltungen:
- WO-A1-2017/181209
- DE-A1-102015 225 300

## Beschreibung

Die Erfindung betrifft eine 3D-Druckvorrichtung zur Photopolymerisation eines photosensitiven Kunstharzes durch ein Belichtungsmuster.

Es sind 3D-Druckverfahren bekannt, bei denen mittels eines Projektors Licht von unten auf ein Kunstharzbad mit lichtdurchlässigen Boden projiziert werden kann, wodurch an den beleuchteten Stellen das Kunstharz gemäß einem Belichtungsmuster des Projektors ausgehärtet wird. Bei einem sogenannten "Continuous Liquid Interface Production"-Verfahren (CLIP-Verfahren) kann dabei das ausgehärtete Kunstharz schrittweise nach oben gezogen werden, wodurch Kunstharz in die entstehende Lücke am Boden nachfließen kann, das wiederum belichtet werden kann. So kann Schritt für Schritt ein Schichtmodell aus Kunstharz gebildet werden.

Nachteilig bei bisher bekannten CLIP-Verfahren ist es, dass der Projektor, einen Abstand zum Kunstharzbad haben muss, um ein großflächigen Bereich des Kunstharzbades zu belichten, wodurch ein erhöhter Platzbedarf vorliegt.

Aus der WO 2017/181208 A1 ist eine Vorrichtung und ein Verfahren zur Steigerung der Anhaftung einer Bauteilschicht an einem Trägerobjekt bekannt. Zum Anhaften eines Objekts an einem Objektträger in einem stereolithographischen Prozess, wobei das Objekt durch Aushärtung einer fotosensitiven Substanz mittels Aushärte-Strahlung gebildet wird, wird zum Anhaften des Objekts zumindest in einem Teilbereich am Objektträger eine Sekundärstrahlung in einer von der Richtung der Aushärte-Strahlung verschiedenen Richtung zum Objektträger gestrahlt, wobei die Sekundärstrahlung dem allgemein plattenförmigen, strahlundurchlässigen Objektträger seitlich zugeführt und innerhalb des Objektträgers umgelenkt wird.

Der Erfindung liegt die Aufgabe zugrunde, eine platzsparende 3D-Druckvorrichtung bereitzustellen.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren offenbart.

Durch die Erfindung ist eine 3D-Druckvorrichtung zur Photopolymerisation eines photosensitiven Kunstharzes durch ein Belichtungsmuster bereitgestellt. Als Kunstharz kann beispielsweise ein Photopolymer, wie Polypropylen oder Polyurethan, verwendet werden. Die 3D-Druckvorrichtung weist ein Kunstharzbad für den photosensitiven Kunstharz und eine Hebevorrichtung auf, wobei der photosensitive Kunstharz an der Hebevorrichtung mittels Licht einer vorgegebenen Wellenlänge, insbesondere ultravioletten Lichts, als gehärteter Körper polymerisierbar ist und wobei die Hebevorrichtung dazu ausgebildet ist, den gehärteten Körper aus dem Kunstharzbad zu bewegen, beispielsweise schrittweise oder kontinuierlich, um eine Belichtungsebene des photosensitiven Kunstharzes zu ändern. Das Kunstharzbad kann dabei vorzugsweise einen transparenten Boden aufweisen, durch den Licht, insbesondere UV-Licht, hindurchstrahlen kann. Dazu kann insbesondere Quarzglas verwendet werden.

Ferner umfasst die 3D-Druckvorrichtung ein Trägermedium, welches dazu ausgebildet ist, als Lichtleiter ein gekoppeltes Licht mittels interner Reflexion zu übertragen, und die 3D-Druckvorrichtung weist einen Einkoppelbereich und einen Auskoppelbereich auf, die in unterschiedlichen Abschnitten des Trägermediums angeordnet sind. Das Trägermedium trägt also den Einkoppelbereich und den Auskoppelbereicht. Es ist zudem ein Lichtleitmedium. Des Weiteren ist eine Beleuchtungsvorrichtung vorgesehen, die dazu ausgebildet ist, das Licht auf den Einkoppelbereich abzustrahlen.

Der Einkoppelbereich weist eine Einkoppelablenkstruktur auf, die dazu ausgelegt ist, Licht mit der vorgegebenen Wellenlänge, das von der Beleuchtungsvorrichtung auf die Einkoppelablenkstruktur fällt, in das Trägermedium in Richtung des Auskoppelbereichs einzukoppeln, wobei der Auskoppelbereich unter dem Kunstharzbad angeordnet ist und eine Auskoppelablenkstruktur aufweist, die dazu ausgebildet und angeordnet ist, das eingekoppelte Licht mit der vorgegebenen Wellenlänge, das auf die Auskoppelablenkstruktur fällt, als Belichtungsmuster aus dem Trägermedium auf den photosensitiven Kunstharz des Kunstharzbads zur Photopolymerisation des Kunstharzes auszukoppeln.

Mit anderen Worten kann eine Beleuchtungsvorrichtung, die beispielsweise eine UV-Lampe oder ein UV-Leuchtmittel umfassen kann, Licht mit einer vorgegebenen Wellenlänge auf einen Einkoppelbereich eines Trägermediums abstrahlen, wobei eine Einkoppelablenkstruktur des Einkoppelbereichs das Licht in ein Trägermedium einkoppeln kann. In dem Trägermedium kann das Licht dann mittels interner Reflexion, das heißt mittels Totalreflexion, zu dem besagten Auskoppelbereich geleitet werden, wobei an einer Auskoppelablenkstruktur des Auskoppelbereichs das Licht durch einen lichtdurchlässigen Boden des Kunstharzbades auf einen photosensitiven Kunstharz ausgekoppelt werden kann.

Der derart belichtete photosensitive Kunstharz kann durch das Licht polymerisieren, das heißt aushärten, wobei dieser dadurch entstehende gehärtete Körper vorzugsweise an einer Unterseite einer Hebevorrichtung aushärten kann. Die Hebevorrichtung kann anschließend um eine vorgegebene Distanz beziehungsweise mit einer vorgegebenen Geschwindigkeit und/oder um eine vorgegebene Schrittweite nach oben fahren, wodurch sich ein zwischen dem gehärteten Körper und einem Boden des Kunstharzbades ein Spalt bilden kann, in den neuer Kunstharz zur Photopolymerisation fließen kann. Der nachgeflossene Kunstharz in dem Spalt kann dann anschließend erneut belichtet werden, wodurch nach und nach ein 3D-Druck gemäß einem Belichtungsmuster der Beleuchtungsvorrichtung entstehen kann.

Die Einkoppelablenkstruktur und die Auskoppelablenkstruktur können als Beugungsstruktur oder Brechungsstruktur, als eine Interferenzstruktur, Gitterstruktur, als Linsensystem oder Spiegel ausgebildet sein. Insbesondere können die Einkoppelablenkstruktur und die Auskoppelablenkstruktur jeweils als holographisches optisches Element (HOE) (oder abgekürzt holographisches Element) ausgebildet sein, das Licht mit einer vorgegebenen Wellenlänge in einen vorgegebenen Winkel ablenken kann.

Die Hebevorrichtung kann als eine im Kunstharzbad versenkte Plattform ausgebildet sein, die beispielsweise über eine Schiene und/oder ein Seil mit einem Elektromotor verbunden sein kann, der die Plattform schrittweise oder kontinuierlich aus dem Kunstharzbad ziehen kann, wobei sich die Plattform in einer Ausgangsposition in einer Nähe zum Boden des Kunstharzbades befinden kann, so dass ein Spalt zwischen der Plattform und den Boden vorhanden ist, in dem sich zu belichtendes Kunstharz befinden kann. Bei Belichtung kann das im Spalt befindliche Kunstharz polymerisieren, insbesondere kann sich eine Schicht des Kunstharzes mit der Unterseite der Plattform verbinden, so dass bei einem Herausziehen der Plattform das polymerisierte Kunstharz mit herausgezogen wird.

Durch die Erfindung ergibt sich der Vorteil, dass eine Projektionsfläche im Kunstharzbad durch die Verteilung des Lichts über das Trägermedium vergrößert werden kann, ohne einen Abstand von der Beleuchtungsvorrichtung beziehungsweise eines Projektors zum Kunstharzbad vergrößern zu müssen. Dadurch kann eine Druckfläche beziehungsweise Belichtungsfläche der 3D-Druckvorrichtung vergrößert werden, ohne einen erhöhten Bauraum für optische Komponenten zu benötigen, die beispielsweise für eine Strahlaufweitung benötigt worden wären. Somit kann bei der 3D-Druckvorrichtung Bauraum eingespart werden.

Des Weiteren ist vorgesehen, dass die Einkoppelablenkstruktur und die Auskoppelablenkstruktur als ein holographisches Element mit zumindest einem optischen Gitter ausgebildet sind, insbesondere ein holographisches Volumengitter oder ein holographisches Oberflächengitter.

Ein holographisches Element, das auch als holographisch-optisches Element (HOE) bezeichnet wird, ist ein optisches Element, dessen Funktionsprinzip auf Holographie beruht und das mittels holographischer Verfahren, das heißt holographischer Belichtung, hergestellt werden kann. Dafür kann ein Interferenzmuster, das bei der Überlagerung von zwei kohärenten Wellen gleicher Wellenlänge entsteht, auf einer lichtempfindlichen Schicht aufgezeichnet werden. Auf diese Weise lassen sich holographische Elemente, wie beispielsweise Gitter, Linsen, Spiegel und Strahlteiler herstellen, die ähnliche Eigenschaften wie die konventionellen optischen Komponenten besitzen. Ein holographisches Element kann insbesondere als optisches Gitter beziehungsweise Beugungsgitter ausgebildet sein.

Optische Gitter, auch Beugungsgitter genannt, sowie deren Wirkungsweise und Herstellungsverfahren sind dabei allgemein bekannt. Grundsätzlich können optische Gitter als zumindest abschnittsweise periodische Strukturen, sogenannte Gitterstrukturen, in einem Substrat ausgebildet sein, die durch den physikalischen Effekt der Beugung eine Lichtlenkung, wie sie zum Beispiel von Spiegeln, Linsen oder Prismen bekannt ist, herbeiführen können. Fällt Licht, d.h. fallen Lichtstrahlen auf das optische Gitter, wobei die einfallenden Lichtstrahlen insbesondere die Bragg-Gleichung erfüllen, werden die Lichtstrahlen durch das optische Gitter gebeugt oder abgelenkt. Die Lichtlenkung kann somit insbesondere durch Interferenzerscheinungen der durch das optische Gitter gebeugten Lichtstrahlen erfolgen. Die Ablenkstruktur kann entsprechend auch als Beugungsstruktur bezeichnet werden. Ein holographisches Oberflächengitter und ein holographisches Volumengitter sind holographisch-optische Elemente, die insbesondere durch ein Holographieverfahren hergestellt werden können.

Vorzugsweise kann ein optisches Gitter gegenüber dem einfallenden Licht winkel- beziehungsweise richtungsselektiv und/oder wellenlängen- beziehungsweise frequenzselektiv ausgebildet sein. Somit kann nur Licht, das aus einer vorbestimmten Einfallsrichtung, zum Beispiel in einem vorbestimmten Winkel, auf ein optisches Gitter fällt, abgelenkt werden. Licht, das aus einer anderen Richtung auf das optische Gitter fällt, wird vorzugsweise nicht abgelenkt oder umso weniger, je größer der Unterschied zur vorbestimmten Einfallsrichtung ist. Zusätzlich oder alternativ kann auch nur Licht einer Wellenlänge oder Licht, welches höchstens um einen vorbestimmten Wellenlängenbereich von der vorbestimmten Wellenlänge abweicht, von dem optischen Gitter in einem bestimmten Beugungswinkel abgelenkt werden. Anders formuliert kann beispielsweise eine Optimalwellenlänge vorgegeben sein, bei der nur ein Anteil des Lichts in einem bestimmten Wellenlängen- oder Frequenzbereich um die Optimalwellenlänge von dem optischen Gitter abgelenkt wird (beispielsweise eine zentrale Optimalwellenlänge und ein Bereich mit Wellenlängenwerten bis +/- 10 Prozent der Optimalwellenlänge), der übrige Anteil des Lichts kann hingegen ohne abgelenkt zu werden durch das Gitter propagieren. Von polychromatischem Licht, welches auf das optische Gitter trifft, kann somit wenigstens ein monochromatischer Lichtanteil abgespaltet werden. Der Ablenkeffekt ergibt sich somit frequenzselektiv und/oder winkelselektiv, wobei der Ablenkeffekt für ein Optimalwellenlänge maximal ist und zu längeren und kürzeren Wellenlängen hin abfällt oder schwächer wird, beispielsweise gemäß einer Gaußglocke abfällt. Insbesondere wirkt der Ablenkeffekt nur auf einen Bruchteil des sichtbaren Lichtspektrums und/oder in einem Winkelbereich kleiner als 90 Grad.

Besonders bevorzugt können optische Gitter mittels Belichtung eines Substrats, also beispielsweise fotolithografisch oder holografisch, hergestellt werden. In diesem Zusammenhang können die optischen Gitter dann auch als holografische oder holografisch-optische Gitter bezeichnet werden. Es sind zwei Arten von holografisch-optischen Gittern bekannt: holografische Oberflächengitter (surface holografic gratings, kurz: SHG) und holografische Volumengitter (volume holografic gratings, kurz: VHG). Bei holografischen Oberflächengittern kann die Gitterstruktur durch optisches Verformen einer Oberflächenstruktur des Substrats erzeugt werden. Durch die veränderte Oberflächenstruktur kann auftreffendes Licht abgelenkt, zum Beispiel reflektiert werden. Beispiele für holografische Oberflächengitter sind sogenannte Sägezahn- oder Blazegitter. Im Gegensatz dazu kann die Gitterstruktur bei holografischen Volumengittern in das ganze Volumen oder einen Teilbereich des Volumens des Substrats eingearbeitet sein. Holografische Oberflächengitter und holografische Volumengitter sind in der Regel frequenzselektiv.

Als Material für ein Substrat zum Einarbeiten eines optischen Gitters eignet sich zum Beispiel besonders Glas, Vorzugsweise Quarzglas. Alternativ oder zusätzlich kann auch ein Polymer, insbesondere Fotopolymer, oder eine Folie, insbesondere eine fotosensitive Folie, zum Beispiel aus Kunststoff oder einem organischen Stoff verwendet werden. Zur Verwendung derartiger Substrate, sollte zusätzlich beachtet werden, dass das Material, insbesondere in Substratform, flexible und lichtwellenleitende Eigenschaften aufweist. Substrate die eine Ablenkstruktur zum Beugen von Licht, beispielsweise in Form eines optischen Gitters aufweisen, können auch als holografisch-optische Elemente (HOE) bezeichnet werden.

Zu der Erfindung gehören auch Ausführungsformen, durch die sich zusätzliche Vorteile ergeben.

Eine weitere Ausführungsform sieht vor, dass die Beleuchtungsvorrichtung ferner einen Infrarotstrahler aufweist und wobei die Einkoppelablenkstruktur und die Auskoppelablenkstruktur als eine Multiplex-Beugungsstruktur ausgebildet sind, die dazu ausgebildet ist, Licht von zumindest der vorgegebenen Wellenlänge und Licht des Infrarotstrahlers in einem vorbestimmten Winkel zu beugen. Mit anderen Worten kann die Beleuchtungsvorrichtung neben einer Lichtquelle, die Licht mit der vorgegebenen Wellenlänge zur Photopolymerisation des Kunstharzes abstrahlt, einen Infrarotstrahler umfassen, der beispielsweise das Kunstharz erwärmen kann und so die Bereiche des Kunstharzes, die nicht dem Belichtungsmuster mit der ersten vorgegebenen Wellenlänge entsprechen, verflüssigen kann. Hierzu kann vorzugsweise die Einkoppelablenkstruktur und die Auskoppelablenkstruktur als eine Multiplex-Beugungsstruktur ausgebildet sein.

Eine Beugungsstruktur, zum Beispiel ein optisches Gitter, ist in der Regel frequenzselektiv. Es sind jedoch auch optische Gitter bekannt, die polychromatisches Licht beugen können. Diese werden als holografische Mehrvolumenfachgitter (multiplexed volume holografic gratings, kurz: MVHG) bezeichnet und können beispielsweise durch Verändern der Periodizität der Gitterstruktur eines optischen Gitters oder durch Anordnen mehrerer holografisches Volumengitter hintereinander hergestellt werden, wodurch eine Multiplex-Beugungsstruktur entsteht.

Durch diese Ausführungsform ergibt sich der Vorteil, dass eine Temperatur des Kunstharzbads zur Aufrechterhaltung einer Viskosität des Kunstharzes aufrecht erhalten werden kann ohne platzfordernde Heizvorrichtungen zu verwenden.

Eine weitere Ausführungsform sieht vor, dass der Einkoppelbereich und der Auskoppelbereich einstückig mit dem Trägermedium ausgebildet sind oder wobei das Trägermedium als separates Element zu dem Einkoppelbereich und dem Auskoppelbereich ausgebildet ist. Im ersten Fall können der Einkoppelbereich und der Auskoppelbereich somit beispielsweise direkt in eine Oberflächenstruktur des Trägermediums eingearbeitet werden. Somit kann das Trägermedium selbst als HOE ausgebildet sein, beispielsweise geätzt oder gelasert sein. Im zweiten Fall kann das Trägermedium separat von dem Einkoppelbereich und dem Auskoppelbereich ausgebildet sein. Dabei können der Einkoppelbereich und der Auskoppelbereich beispielsweise jeweils ein Element bilden und das Trägermedium kann ein anderes Element bilden, welches an den jeweiligen Elementen anliegt. Somit können der Einkoppelbereich und der Auskoppelbereich in wenigstens einem HOE ausgebildet sein. Dies ermöglicht eine größer Auswahl bei der Nutzung eines Trägermediums. Beispielsweise kann der Einkoppelbereich und der Auskoppelbereich in unterschiedlichen Abschnitten einer holografischen Folie oder Platte ausgebildet sein. Zum Befestigen der Folie oder Platte an dem Trägermedium kann die Folie oder Platte an das Trägermedium angeklebt sein. Alternativ kann die holografische Folie auch als Adhäsionsfolie ausgebildet sein und direkt, also ohne Klebstoff, durch molekulare Kräfte an der Oberfläche des Trägermediums haften.

Eine weitere Ausführungsform sieht vor, dass der Einkoppelbereich eine kleinere Abmessung als Auskoppelbereich aufweist, wobei die Einkoppelablenkstruktur eine Zerstreuungsgitterstrukur aufweist, die dazu ausgebildet ist, Lichtstrahlen des Lichts, das auf die Einkoppelablenkstruktur fällt, in Abhängigkeit eines Einfallsortes unterschiedlich stark abzulenken, so dass die Einkoppelablenkstruktur die Lichtstrahlen auf die Auskoppelablenkstruktur auffächert und wobei die Auskoppelablenkstruktur eine Bündelungsgitterstruktur aufweist, die dazu ausgebildet ist, Lichtstrahlen des Lichts in Abhängigkeit des Einfallsortes unterschiedlich stark abzulenken und zum Auskoppeln aus dem Trägermedium auf das photosensitive Kunstharz des Kunstharzbads zu parallelisieren oder zu fokussieren. Mit anderen Worten kann Licht, das auf die Einkoppelablenkstruktur fällt, auf eine Abmessung des Auskoppelbereichs ausgeweitet werden.

Eine Zerstreuungsgitterstruktur kann eine inhomogene Beugungsstruktur aufweisen, die beispielsweise Lichtstrahlen von einem Rand der Beugungsstruktur stärker beugen kann als Lichtstrahlen von einer Mitte der Beugungsstruktur, wodurch die Lichtstrahlen aufgefächert werden können. Dementsprechend kann eine Bündelungsgitterstruktur eine Gitterstruktur aufweisen, bei der Lichtstrahlen je nach auftreffender Position fokussiert werden können. Vorzugsweise sind in dieser Ausführungsform die Bündelungsgitterstruktur und die Zerstreuungsgitterstruktur und die entsprechenden Abstände der beiden Strukturen so gewählt, dass die Lichtstrahlen von der Zerstreuungsgitterstruktur zu der Bündelungsgitterstruktur auseinanderlaufen und von der Bündelungsgitterstruktur wieder parallelisiert werden. Diese Anordnung ist vergleichbar mit einem Galilei-Fernrohr, bei dem eine Sammellinse und eine Zerstreuungslinse derart hintereinander angeordnet sind, dass die Brennweiten der beiden Linsen hinter der Zerstreuungslinse in einem Punkt zusammenfallen. Durch diese Ausführungsform ergibt sich der Vorteil, dass Licht über eine große Fläche verteilt werden kann, ohne für die Auffächerung der Lichtstrahlen einen erhöhten Platzbedarf zu benötigen. Außerdem kann somit ein Lichtstrahl, der aufgefächert wurde, wieder parallel auf das Kunstharzbad gelenkt werden, was die Präzision eines 3D-Drucks erhöhen kann.

Eine weitere Ausführungsform sieht vor, dass die Beleuchtungsvorrichtung einen Projektor mit einer auswechselbaren Fotomaske aufweist, der dazu ausgebildet ist, eine das Belichtungsmuster bildende Abstrahlcharakteristik zum Belichten des Kunstharzes festzulegen. Die auswechselbare Fotomaske des Projektors kann als ein Negativbild dienen, die das Belichtungsmuster zur Bestrahlung des Kunstharzes erzeugen kann, wobei vorzugsweise die auswechselbare Fotomaske mittels einer Austauschvorrichtung, entsprechend einem gewünschten Belichtungsmuster, ausgetauscht werden kann, beispielsweise ähnlich einem Diaprojektor. Des Weiteren kann der Projektor dazu ausgebildet sein, durch eine variable Belichtungszeit eine Intensität des Projektorbildes großflächig oder in einem Teilbereich des Projektorbildes zu verändern. Durch diese Ausführungsform ergibt sich der Vorteil, dass durch die auswechselbare Fotomaske eine variable Abstrahlcharakteristik festgelegt werden kann, bei der Bereiche länger oder stärker belichtet werden können.

Eine weitere Ausführungsform sieht vor, dass die Beleuchtungsvorrichtung eine Fokuseinrichtung aufweist, die dazu ausgebildet ist, fokussierte Lichtstrahlen, das heißt zusammenlaufende Lichtstrahlen, auf den Einkoppelbereich abzustrahlen, wobei die fokussierten Lichtstrahlen nach Übertragung durch das Trägermedium zu dem Auskoppelbereich und nach Austritt aus dem Auskoppelbereich sich in einer Fokusebene im Kunstharzbad kreuzen. Mit anderen Worten kann die Beleuchtungsvorrichtung eine Fokuseinrichtung umfassen, insbesondere eine Linse oder ein Linsensystem, die Lichtstrahlen fokussieren kann. Durch die Fokuseinrichtung können die Lichtstrahlen derart fokussiert werden, dass ein Fokuspunkt, das bedeutet der Punkt an dem sich die Lichtstrahlen kreuzen, oder eine Fokusebene in dem Kunstharzbad liegt. Vorzugsweise kann eine Intensität der Lichtstrahlen derart gewählt werden, dass ein Aushärten des Kunstharzes im Kunstharzbad erst in der Fokusebene eintritt. Durch diese Ausführungsform ergibt sich der Vorteil, dass zwischen dem Boden des Kunstharzbades und der Hebevorrichtung ein größerer Spalt vorhanden sein kann, der dann durch Einstellen der Fokusebene beispielsweise von oben nach unten, also von der Hebevorrichtung zu dem Boden des Kunstharzbads, ausgehärtet, das heißt photopolymerisiert werden kann. Es ist jedoch auch möglich, dass zwei oder mehrere Fokusebenen durch geeignetes Einstellen der Fokuseinrichtung gleichzeitig ausgehärtet werden können, wodurch ein schnellerer 3D-Druck möglich ist.

Eine weitere Ausführungsform sieht vor, dass die Beleuchtungsvorrichtung eine Abrastervorrichtung mit einer Lichtquelle aufweist, die dazu ausgebildet ist, über ein Abrastern des Einkoppelbereichs den photosensitiven Kunstharz entsprechend einer Abrasterposition der Abrastervorrichtung zu polymerisieren. Die Abrastervorrichtung kann beispielsweise eine bewegliche Beleuchtungsleiste oder einen Laser mit Ablenkspiegel aufweisen, wobei die Abrastervorrichtung das Licht gemäß einem gewünschten Belichtungsmuster in den Einkoppelbereich abstrahlen kann, von wo es dann durch das Trägermedium an die entsprechende Stelle des Kunstharzbades zum Aushärten des Kunstharzes weitergeleitet werden kann. Auch in dieser Ausführungsform kann eine variable Belichtungszeit für eine gewünschte Abstrahlcharakteristik vorgesehen sein. Durch diese Ausführungsform ergibt sich der Vorteil, dass ein gewünschtes Belichtungsmuster je Schicht des 3D-Drucks schnell verändert werden kann.

Eine Ausführungsform sieht vor, dass ferner eine Kameravorrichtung vorgesehen ist, die neben der Beleuchtungsvorrichtung angeordnet und dazu ausgebildet ist, zumindest ein Bild eines Polymerisationszustandes des Kunstharzes für eine Überwachung der Photopolymerisation aufzunehmen, indem die Kameravorrichtung das Bild des Polymerisationszustandes des Kunstharzes aufnimmt, das von dem Kunstharzbad zurück über den Auskoppelbereich, das Trägermedium und den Einkoppelbereich in die Kameravorrichtung fällt. Mit anderen Worten kann über den gleichen Weg, auf dem das Licht mit der vorgegebenen Wellenlänge von der Beleuchtungsvorrichtung in das Kunstharzbad geleitet wird, also den Einkoppelbereich, das Trägermedium und den Auskoppelbereich, Licht des Kunstharzbades zurückgeleitet werden, wobei neben der Beleuchtungsvorrichtung eine Kameravorrichtung vorgesehen sein kann, die dieses Licht für die Aufnahme eines Bildes aufnimmt. Insbesondere kann ein Polymerisationszustand, das bedeutet, eine aktuelle Aushärtung des Kunstharzes, aufgenommen werden, wodurch eine Überwachung der Aushärtung, das heißt der Photopolymerisation, stattfinden kann. Durch diese Ausführungsform ergibt sich der Vorteil, das eine Überwachung des 3D-Druckprozesses durchgeführt werden kann und eventuelle Fehler ausgebessert beziehungsweise vermieden werden können. Hierdurch kann eine Qualität des 3D-Drucks verbessert werden.

Eine weitere Ausführungsform sieht vor, dass das Trägermedium einen Boden des Kunstharzbades bildet. Mit anderen Worten kann der Boden, insbesondere der transparente Boden des Kunstharzbades, aus dem Trägermedium gebildet sein, wobei vorzugsweise der Auskoppelbereich einen Großteil des Bodens des Kunstharzbades einnimmt. Hierdurch kann Platz eingespart werden, da eine großflächige Verteilung des Lichts über das Trägermedium uns somit des Kunstharzbades ermöglicht wird.

Im Folgenden sind Ausführungsbeispiele der Erfindung beschrieben. Hierzu zeigt:
- Fig. 1: eine schematische Querschnittsansicht einer beispielhaften Ausführungsform;
- Fig. 2: eine schematische Darstellung einer beispielhaften Ausführungsform;
- Fig. 3: eine schematische Darstellung einer weiteren beispielhaften Ausführungsform;
- Fig. 4: eine schematische Darstellung einer weiteren beispielhaften Ausführungsform.

Bei den im Folgenden erläuterten Ausführungsbeispielen handelt es sich um bevorzugte Ausführungsformen der Erfindung.

In den Figuren bezeichnen gleiche Bezugszeichen jeweils funktionsgleiche Elemente.

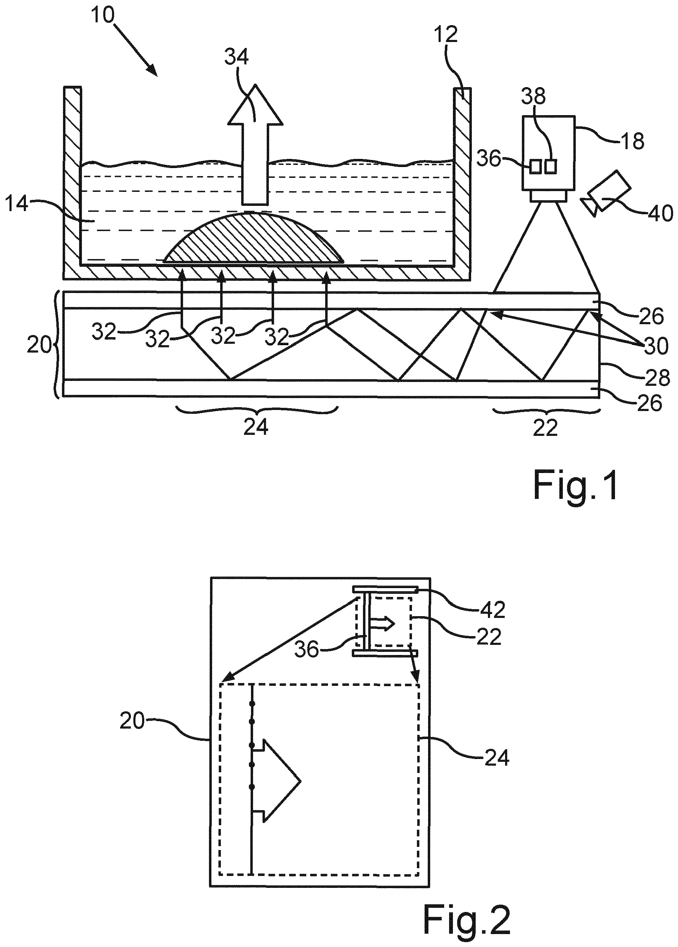

In Fig. 1 ist eine schematische Querschnittsansicht einer 3D-Druckvorrichtung 10 gemäß einer beispielhaften Ausführungsform dargestellt. Die 3D-Druckvorrichtung 10 weist ein Kunstharzbad 12 auf, in dem sich photosensitives Kunstharz 14 befinden kann. Das Kunstharz 14 kann mittels Licht, insbesondere mittels Licht einer vorgegebenen Wellenlänge, wie UV-Licht, polymerisieren, das heißt aushärten, um einen gehärteten Körper 16, der ein zu druckendes Objekt 16 sein kann, insbesondere eine Kunstharzstruktur, zu bilden.

Ferner kann die 3D-Druckvorrichtung 10 eine Beleuchtungsvorrichtung 18 aufweisen, die dazu ausgebildet sein kann, Licht mit der vorgegebenen Wellenlänge abzustrahlen.

Unter dem Kunstharzbad 12 kann ein Trägermedium 20 angeordnet sein, das einen Einkoppelbereich 22 und einen Auskoppelbereich 24 aufweisen kann. Das Trägermedium 20 kann beispielsweise mittels einer Schichtbauweise ausgebildet sein, wobei zwei lichtleitende Elemente 26, wie zum Beispiel Glas- oder Kunststoffplatten, die Deckschichten 26 für ein holographisch optisches Element 28 oder abgekürzt holographisches Element 28, bilden können. Alternativ oder zusätzlich kann das holographische Element 28 auch durch eine Stapelung mehrerer holographischer Elemente erzeugt werden.

Das holographische Element 28 kann beispielsweise eine Photopolymerfolie oder ein Glas sein, das zwischen die beiden Deckschichten 26 eingebracht ist, vorzugsweise aufgeklebt. Ferner kann das holographische Element 28 durch holographische Belichtungsverfahren derart ausgebildet sein, dass sich Ablenkstrukturen bilden, wie beispielsweise ein holographisches Volumengitter oder ein holographisches Oberflächengitter.

In dem Einkoppelbereich 22 kann somit eine Einkoppelablenkstruktur 30 erzeugt werden, die dazu ausgelegt ist, Licht mit der vorgegebenen Wellenlänge von der Beleuchtungsvorrichtung 18 in das Trägermedium 20 in Richtung des Auskoppelbereichs 24 einzukoppeln. In Richtung des Auskoppelbereichs bedeutet hier eine makroskopische Richtung vom Messbereich entlang des Trägermediums zu dem Auskoppelbereich 24, beziehungsweise ein Richtungsvektor in die Ausbreitungsrichtung des Lichts mittels interner Reflexion. Eine Weiterleitung mittels interner Reflexion bedeutet, dass die eingekoppelten Lichtstrahlen einer Grenzwinkelbedingung der Totalreflexion genügen. Ein Lichtpfad kann hierbei natürlich aufgrund der internen Reflexion einen Zickzack-Verlauf aufweisen.

Ferner kann die Einkoppelablenkstruktur 30 eine Zerstreuungsgitterstrukur aufweisen, die Lichtstrahlen des Lichts, das auf die Einkoppelablenkstruktur 30 fällt, in Abhängigkeit eines Einfallsortes unterschiedlich stark ablenkt, so dass die Lichtstrahlen auf ein Auskoppelablenkstruktur 32 des Auskoppelbereichs aufgefächert werden. Die Auskoppelablenkstruktur 32 kann aus dem gleichen holographisch optischen Element 28 gebildet sein, indem in dem Auskoppelbereich 24 das holographisch optische Element 28 derart mittels holographischer Belichtungsverfahren belichtet wurde, dass sich ein optisches Gitter, insbesondere ein holographisches Volumengitter oder ein holographisches Oberflächengitter, bildet. Die Auskoppelablenkstruktur 32 ist dazu ausgebildet, das in das Trägermedium 20 eingekoppelte Licht, das auf die Auskoppelablenkstruktur 32 fällt, aus dem Trägermedium 20 in das Kunstharzbad 12 zur Photopolymerisation des Kunstharzes auszukoppeln. Insbesondere kann die Auskoppelablenkstruktur 32 eine Bündelungsgitterstruktur aufweisen, die Lichtstrahlen des Lichts in Abhängigkeit des Einfallsortes unterschiedlich stark ablenkt und somit die von der Einkoppelablenkstruktur 30 aufgefächerten Lichtstrahlen wieder parallelisiert oder fokussiert. Somit können die Einkoppelablenkstruktur 30 und die Auskoppelablenkstruktur 32 als ein Strahlaufweiter ("Beam Expander") verwendet werden.

Somit kann Licht mit der vorgegebenen Wellenlänge, das von der Beleuchtungsvorrichtung 18 auf den Einkoppelbereich 22 abgestrahlt wird, von der Einkoppelablenkstruktur 30 in das Trägermedium 20 eingekoppelt werden und mittels interner Reflexion zu dem Auskoppelbereich 24 weitergeleitet werden, wo es dann von der Auskoppelablenkstruktur 32 in einem im Vergleich zu dem Einkoppelbereich 22 vergrößerten Bereich in das Kunstharzbad 12 abgestrahlt werden kann, wo es eine Schicht des Kunstharzes 14 aushärten kann.

Das Kunstharz 14 kann insbesondere an einer Unterseite einer Hebevorrichtung 34 aushärten, wobei die Hebevorrichtung 34 das so entstehende Objekt 16 schichtweise aus dem Kunstharzbad 12 herausziehen kann, wodurch das Kunstharz 14 in einen Spalt zwischen einem Boden des Kunstharzbads und dem Objekt 16 nachfließen kann, wo das nachgeflossene Kunstharz 14 dann wieder belichtet werden kann. So kann schrittweise oder kontinuierlich das Objekt 16 gebildet werden.

Die Beleuchtungsvorrichtung 18 kann eine Lichtquelle 36 umfassen, die beispielsweise ein Projektor mit einer auswechselbaren Fotomaske sein kann. Durch die Fotomaske kann insbesondere eine das Belichtungsmuster bildende Abstrahlcharakteristik zum Belichten des Kunstharzes festgelegt werden. Ferner kann die Beleuchtungsvorrichtung 18 einen Infrarotstrahler 38 aufweisen. Der Infrarotstrahler 38 kann beispielsweise dafür ausgebildet sein, infrarotes Licht auf die Einkoppelablenkstruktur 30 abzustrahlen, wobei die Einkoppelablenkstruktur 30 insbesondere auch als ein Multiplex-Beugungsstruktur ausgebildet sein kann, was bedeutet, dass diese zusätzlich zu dem Licht mit der vorgegebenen Wellenlänge auch Licht des Infrarotstrahlers 38 in das Trägermedium 20 einkoppeln kann. Ebenso kann die Auskoppelablenkstruktur 32 als eine Multiplex-Beugungsstruktur ausgebildet sein, die zumindest das Licht der vorgegebenen Wellenlänge und das Licht des Infrarotstrahlers in einem vorbestimmten Winkel beugen kann, so dass das Licht der beiden Wellenlängen auf das Kunstharz 14 abgestrahlt werden kann.

Neben der Beleuchtungsvorrichtung 18 kann eine Kameravorrichtung 40 vorgesehen sein, die dazu ausgebildet ist, zumindest ein Bild eines Polymerisationszustandes des Kunstharzes aufzunehmen, um einen Fertigungsprozess des 3D-Drucks zu überwachen. Hierfür kann die Kameravorrichtung 40 beispielsweise Licht, das von dem Objekt 16 reflektiert und zurück über den Auskoppelbereich, das Trägermedium und den Einkoppelbereich übertragen wird, detektieren. Somit kann ein Bild des aktuellen Polymerisationszustandes des Kunstharzes aufgenommen werden und beispielsweise mögliche Fehler erkannt und durch eine Ansteuerung der Beleuchtungsvorrichtung 18 zur Änderung des Belichtungsmusters ausgebessert werden. Dazu kann das aufgenommene Schichtbild analysiert und mit einem digitalen Schichtbild abgeglichen werden. Werden Abweichungen, wie ein Verzug oder Löcher, festgestellt, kann dies durch Korrekturmaßnahmen, wie beispielsweise eine Änderung der Belichtungszeit, der Belichtungsstärke und/oder einer Abwandlung des Belichtungsmusters, kompensiert werden.

In Fig. 2 ist eine schematische Darstellung einer beispielhaften Ausführungsform gezeigt. In dieser Darstellung ist eine Draufsicht auf ein Trägermedium 20 mit einem Einkoppelbereich 22 und einem Auskoppelbereich 24 dargestellt. In dieser Ausführungsform kann die Beleuchtungsvorrichtung 18 beispielsweise eine Abrastervorrichtung 42 mit der Lichtquelle 36 aufweisen. In dieser Ausführungsform kann die Abrastervorrichtung 42 beispielsweise ein Führungsschienensystem sein, das die Lichtquelle 36, die in dieser Ausführungsform als eine Belichtungsleiste 36 ausgebildet ist, über den Einkoppelbereich 22 fahren kann und je nach Position eine geeignete Belichtung zur Erzeugung des Belichtungsmusters bereitstellen kann. Hierzu kann beispielsweise auch eine variable Belichtungszeit für eine jeweilige Position der Belichtungsleiste 36 durchgeführt werden.

Durch eine Auffächerung des Lichts von dem Einkoppelbereich 22 zu dem Auskoppelbereich 24 kann zudem erreicht werden, dass durch eine Abrasterung des vergleichsweise kleinen Einkoppelbereichs 22 der im Vergleich dazu große Auskoppelbereich 24 abgerastert wird, was durch die Pfeile nach rechts angedeutet ist.

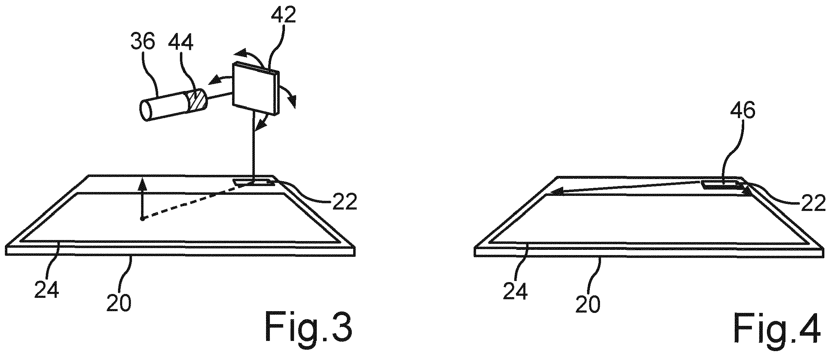

In Fig. 3 ist eine schematische Darstellung einer weiteren beispielhaften Ausführungsform dargestellt. In dieser Darstellung ist wieder das Trägermedium 20 mit dem Einkoppelbereich 22 und dem Auskoppelbereich 24 dargestellt. In dieser Ausführungsform kann die Beleuchtungsvorrichtung 18 einen Ablenkspiegel als Abrastervorrichtung 42 aufweisen, der vorzugsweise mittels eines piezoelektrischen Elements verkippt werden kann und somit einen Lichtstrahl, der von der Lichtquelle 36, die insbesondere ein Laser sein kann, stammt, ablenken kann. Somit können Lichtstrahlen der Lichtquelle 36 über den Ablenkspiegel 42 auf eine Stelle des Einkoppelbereichs 22 in das Trägermedium eingekoppelt werden und an einer entsprechenden Stelle des Auskoppelbereichs 24 ausgekoppelt werden. Insbesondere kann auch eine Fokuseinrichtung 44 vorgesehen sein, die Lichtstrahlen der Lichtquelle 36 in Richtung des Einkoppelbereichs fokussieren kann, wobei die fokussierten Lichtstrahlen nach Übertragung durch das Trägermedium zu dem Auskoppelbereich 24 und nach Austritt des Auskoppelbereichs sich in einer Fokusebene hinter dem Auskoppelbereich 24 kreuzen, wobei die Fokusebene vorzugsweise innerhalb des Kunstharzbades 12 sein kann, wodurch beispielsweise unterschiedliche oder mehrere Schichten gleichzeitig belichtet werden können.

In Fig. 4 ist eine schematische Darstellung einer weiteren beispielhaften Ausführungsform gezeigt. In dieser Ausführungsform kann das Trägermedium 20 im Einkoppelbereich 22 eine darüber gelagerte Fotodiodenmatrix 46 aufweisen, die beispielsweise eine LED- oder OLED-Matrix umfassen kann. Hiermit kann beispielsweise ein Belichtungsmuster aus der Fotodiodenmatrix 46 direkt in den Einkoppelbereich 22 abgestrahlt werden. Anschließend kann das Belichtungsmuster nach Weiterleitung durch das Trägermedium 20 großflächig über den Auskoppelbereich 24 in das Kunstharzbad geleitet werden, um dort das Kunstharz 14 zu belichten.

Insgesamt zeigen die Beispiele, wie durch die Erfindung ein 3D-Druck über ein holographisch optisches Element bereitgestellt werden kann.

## Patentansprüche

1. 3D-Druckvorrichtung (10) zur Photopolymerisation eines photosensitiven Kunstharzes (14) durch ein Belichtungsmuster, aufweisend
- ein Kunstharzbad (12) für den photosensitiven Kunstharz (14) mit einer Hebevorrichtung (34), wobei der photosensitive Kunstharz (14) an der Hebevorrichtung (34) mittels Licht einer vorgegebenen Wellenlänge als gehärteter Körper polymerisierbar ist und wobei die Hebevorrichtung (34) dazu ausgebildet ist, den gehärteten Körper hinauf und aus dem Kunstharzbad (12) zu bewegen, um eine Belichtungsebene für den photosensitiven Kunstharz bezüglich des Körpers zu ändern;
- ein Trägermedium (20), welches dazu ausgebildet ist, eingekoppeltes Licht als Lichtleiter mittels interner Reflexion zu übertragen, und aufweisend ein Einkoppelbereich (22) und ein Auskoppelbereich (24), die in unterschiedlichen Abschnitten des Trägermediums angeordnet sind;
- eine Beleuchtungsvorrichtung (18), die dazu ausgebildet ist, das Licht auf den Einkoppelbereich (22) abzustrahlen; wobei
- der Einkoppelbereich (22) eine Einkoppelablenkstruktur (30) aufweist, die dazu ausgelegt ist, Licht mit der vorgegebenen Wellenlänge, das von der Beleuchtungsvorrichtung (18) auf die Einkoppelablenkstruktur (30) fällt, in das Trägermedium (20) in Richtung des Auskoppelbereichs (24) einzukoppeln; **gekennzeichnet dadurch, dass**
- der Auskoppelbereich (24) unter dem Kunstharzbad (12) angeordnet ist und eine Auskoppelablenkstruktur (32) aufweist, die dazu ausgebildet und angeordnet ist, das eingekoppelte Licht mit der vorgegebenen Wellenlänge, das auf die Auskoppelablenkstruktur (32) fällt, als Belichtungsmuster aus dem Trägermedium (20) auf den photosensitiven Kunstharz (14) des Kunstharzbads zur Photopolymerisation des Kunstharzes auszukoppeln;
- wobei die Einkoppelablenkstruktur (30) und die Auskoppelablenkstruktur (32) als ein holographisches Element (28) mit zumindest einem optischen Gitter ausgebildet sind, insbesondere ein holographisches Volumengitter oder ein holographisches Oberflächengitter.

2. 3D-Druckvorrichtung (10) nach Anspruch 1, wobei die Beleuchtungsvorrichtung (18) ferner einen Infrarotstrahler (38) aufweist und wobei die Einkoppelablenkstruktur (30) und die Auskoppelablenkstruktur (32) als eine Multiplex-Beugungsstruktur ausgebildet sind, die dazu ausgebildet ist, Licht von zumindest der vorgegebenen Wellenlänge und Licht des Infrarotstrahlers in einem vorbestimmten Winkel zu beugen.

3. 3D-Druckvorrichtung (10) nach einem der vorhergehenden Ansprüche, wobei der Einkoppelbereich (22) und der Auskoppelbereich (24) einstückig mit dem Trägermedium (20) ausgebildet sind oder wobei das Trägermedium (20) als separates Element zu dem Einkoppelbereich (22) und dem Auskoppelbereich (24) ausgebildet ist.

4. 3D-Druckvorrichtung (10) nach einem der vorhergehenden Ansprüche, wobei der Einkoppelbereich (22) eine kleinere Abmessung als der Auskoppelbereich (24) aufweist, wobei die Einkoppelablenkstruktur (30) eine Zerstreuungsgitterstruktur aufweist, die dazu ausgebildet ist, Lichtstrahlen des Lichts, das auf die Einkoppelablenkstruktur (30) fällt, in Abhängigkeit eines Einfallsortes unterschiedlich stark abzulenken, sodass die Einkoppelablenkstruktur (30) die Lichtstrahlen auf die Auskoppelablenkstruktur (32) auffächert, und wobei die Auskoppelablenkstruktur (32) eine Bündelungsgitterstruktur aufweist, die dazu ausgebildet ist, Lichtstrahlen des Lichts in Abhängigkeit des Einfallsortes unterschiedlich stark abzulenken und zum Auskoppeln aus dem Trägermedium auf das photosensitive Kunstharz (14) des Kunstharzbads zu parallelisieren oder zu fokussieren.

5. 3D-Druckvorrichtung (10) nach einem der vorhergehenden Ansprüche, wobei die Beleuchtungsvorrichtung (18) einen Projektor mit einer auswechselbaren Fotomaske aufweist, der dazu ausgebildet ist, eine das Belichtungsmuster bildende Abstrahlcharakteristik zum Belichten des Kunstharzes festzulegen.

6. 3D-Druckvorrichtung (10) nach einem der vorhergehenden Ansprüche, wobei die Beleuchtungsvorrichtung (18) eine Fokuseinrichtung (44) aufweist, die dazu ausgebildet ist, fokussierte Lichtstrahlen auf den Einkoppelbereich (22) abzustrahlen, wobei die fokussierten Lichtstrahlen nach Übertragung durch das Trägermedium (20) zu dem Auskoppelbereich (24) und nach Austritt aus dem Auskoppelbereich (24) sich in einer Fokusebene im Kunstharzbad (12) kreuzen.

7. 3D-Druckvorrichtung (10) nach einem der vorhergehenden Ansprüche, wobei die Beleuchtungsvorrichtung (18) eine Abrastervorrichtung (42) mit einer Lichtquelle (36) aufweist, die dazu ausgebildet ist, über ein Abrastern des Einkoppelbereichs den photosensitiven Kunstharz (14) entsprechend einer Abrasterposition der Abrastervorrichtung zu polymerisieren.

8. 3D-Druckvorrichtung (10) nach einem der vorhergehenden Ansprüche, wobei ferner eine Kameravorrichtung (40) vorgesehen ist, die neben der Beleuchtungsvorrichtung (18) angeordnet und dazu ausgebildet ist, zumindest ein Bild eines Polymerisationszustandes des Kunstharzes für eine Überwachung der Photopolymerisation aufzunehmen, indem die Kameravorrichtung (40) das Licht des Bildes des Polymerisationszustandes des Kunstharzes aufnimmt, das von dem Kunstharzbad (12) zurück über den Auskoppelbereich (24), das Trägermedium (20) und den Einkoppelbereich (22) in die Kameravorrichtung (40) fällt.

9. 3D-Druckvorrichtung (10) nach einem der vorhergehenden Ansprüche, wobei das Trägermedium (20) einen Boden des Kunstharzbades bildet.

## Claims

1. A 3D printing device (10) for photopolymerization of a photosensitive synthetic resin (14) by an exposure pattern, comprising
- a synthetic resin bath (12) for the photosensitive synthetic resin (14) with a lifting device (34), wherein the photosensitive synthetic resin (14) is polymerizable as a cured body on the lifting device (34) by means of a light of a preset wavelength, and wherein the lifting device (34) is formed to move the cured body upwards and out of the synthetic resin bath (12) to change an exposure plane for the photosensitive synthetic resin with respect to the body;
- a carrier medium (20), which is formed to transfer coupled-in light as a light guide by means of internal reflection, and comprising a coupling-in area (22) and a coupling-out area (24), which are arranged in different sections of the carrier medium;
- an illumination device (18), which is formed to radiate the light onto the coupling-in area (22); wherein
- the coupling-in area (22) comprises a coupling-in deflection structure (30), which is adapted to couple light with the preset wavelength, which is incident from the illumination device (18) on the coupling-in deflection structure (30), into the carrier medium (20) towards the coupling-out area (24);
**characterized in that**
- the coupling-out area (24) is arranged below the synthetic resin bath (12) and comprises a coupling-out deflection structure (32), which is formed and arranged to couple the coupled-in light with the preset wavelength, which is incident on the coupling-out deflection structure (32), as an exposure pattern out of the carrier medium (20) onto the photosensitive synthetic resin (14) of the synthetic resin bath for photopolymerization of the synthetic resin;
- wherein the coupling-in deflection structure (30) and the coupling-out deflection structure (32) are formed as a holographic element (28) with at least one optical grating, in particular a holographic volume grating or a holographic surface grating.

2. The 3D printing device (10) according to claim 1, wherein the illumination device (18) further comprises an infrared emitter (38) and wherein the coupling-in deflection structure (30) and the coupling-out deflection structure (32) are formed as a multiplex diffraction structure, which is formed to diffract light of at least the preset wavelength and light of the infrared emitter at a predetermined angle.

3. The 3D printing device (10) according to any one of the preceding claims, wherein the coupling-in area (22) and the coupling-out area (24) are formed integrally with the carrier medium (20) or wherein the carrier medium (20) is formed as a separate element from the coupling-in area (22) and the coupling-out area (24).

4. The 3D printing device (10) according to any one of the preceding claims, wherein the coupling-in area (22) has a smaller dimension than the coupling-out area (24), wherein the coupling-in deflection structure (30) has a dispersion grating structure, which is formed to deflect light beams of the light, which is incident on the coupling-in deflection structure (30), to different degrees depending on a place of incidence, such that the coupling-in deflection structure (30) expands the light beams onto the coupling-out deflection structure (32), and wherein the coupling-out deflection structure (32) comprises a concentration grating structure, which is formed to deflect light beams of the light to different degrees depending on the place of incidence and to parallelize or focus them onto the photosensitive synthetic resin (14) of the synthetic resin bath for coupling out of the carrier medium.

5. The 3D printing device (10) according to any one of the preceding claims, wherein the illumination device (18) comprises a projector with an exchangeable photomask, which is formed to set a radiation characteristic forming the exposure pattern for exposing the synthetic resin.

6. The 3D printing device (10) according to any one of the preceding claims, wherein the illumination device (18) comprises a focus device (44), which is formed to radiate focused light beams onto the coupling-in area (22), wherein the focused light beams cross each other in a focus plane in the synthetic resin bath (12) after transfer through the carrier medium (20) to the coupling-out area (24) and after exiting the coupling-out area (24).

7. The 3D printing device (10) according to any one of the preceding claims, wherein the illumination device (18) comprises a scanning device (42) with a light source (36), which is formed to polymerize the photosensitive synthetic resin (14) via scanning the coupling-in area corresponding to a scanning position of the scanning device.

8. The 3D printing device (10) according to any one of the preceding claims, wherein a camera device (40) is further provided, which is arranged next to the illumination device (18) and formed to capture at least one image of a polymerization state of the synthetic resin for monitoring the photopolymerization in that the camera device (40) captures the light of the image of the polymerization state of the synthetic resin, which is incident back from the synthetic resin bath (12) on the camera device (40) via the coupling-out area (24), the carrier medium (20) and the coupling-in area (22).

9. The 3D printing device (10) according to any one of the preceding claims, wherein the carrier medium (20) forms a bottom of the synthetic resin bath.

## Revendications

1. Dispositif d'impression 3D (10) pour la photopolymérisation d'une résine synthétique photosensible (14) par un modèle d'exposition à la lumière, comportant :
- un bain de résine synthétique (12) pour la résine synthétique photosensible (14) avec un dispositif de levage (34), la résine synthétique photosensible (14) sur le dispositif de levage (34) pouvant être polymérisée sous forme de corps durci au moyen d'une lumière à longueur d'onde prédéterminée et le dispositif de levage (34) étant configuré pour déplacer le corps durci vers le haut et en dehors du bain de résine synthétique (12) afin de changer un plan d'exposition pour la résine synthétique photosensible par rapport au corps ;
- un support (20) configuré pour transmettre, par réflexion interne, la lumière couplée sous forme de conduit de lumière, et comportant une zone de couplage (22) et une zone de découplage (24) agencées dans différentes parties du support ;
- un dispositif d'éclairage (18) configuré pour émettre la lumière sur la zone de couplage (22) ;
- la zone de couplage (22) comportant une structure de déviation et de couplage (30) conçue pour coupler dans le support (20) la lumière à la longueur d'onde prédéterminée du dispositif d'éclairage (18), qui est incidente sur la structure de déviation et de couplage (30), en direction de la zone de découplage (24) ; **caractérisé en ce que**
- la zone de découplage (24) est agencée sous le bain de résine synthétique (12) et comporte une structure de déviation et de découplage (32) configurée et agencée de manière à découpler la lumière couplée à la longueur d'onde prédéterminée, qui est incidente sur la structure de déviation et de découplage (32), sous forme de modèle de découplage à l'extérieur du support (20), sur la résine synthétique photosensible (14) du bain de résine synthétique afin de photopolymériser la résine synthétique ;
- la structure de déviation et de couplage (30) et la structure de déviation et de découplage (32) étant réalisées sous la forme d'un élément holographique (28) ayant au moins un réseau optique, en particulier un réseau holographique volumique ou un réseau holographique surfacique.

2. Dispositif d'impression 3D (10) selon la revendication 1, dans lequel le dispositif d'éclairage (18) comporte en outre un émetteur infrarouge (38) et dans lequel la structure de déviation et de couplage (30) et la structure de déviation et de découplage (32) sont réalisées sous la forme d'une structure de diffraction multiplexée configurée pour diffracter la lumière ayant au moins la longueur d'onde prédéterminée et la lumière de l'émetteur infrarouge à un angle prédéterminé.

3. Dispositif d'impression 3D (10) selon l'une des revendications précédentes, dans lequel la zone de couplage (22) et la zone de découplage (24) sont réalisées d'un seul tenant avec le support (20), ou dans lequel le support (20) est réalisé sous la forme d'un élément séparé de la zone de couplage (22) et de la zone de découplage (24).

4. Dispositif d'impression 3D (10) selon l'une des revendications précédentes, dans lequel la zone de couplage (22) a une dimension plus petite que la zone de découplage (24), la structure de déviation et de couplage (30) comportant une structure de réseau de diffusion configurée pour dévier avec une intensité différente des faisceaux lumineux de la lumière incidente sur la structure de déviation et de couplage (30) en fonction d'un site d'incidence, de telle sorte que la structure de déviation et de couplage (30) étale les faisceaux lumineux en éventail sur la structure de déviation et de découplage (32), et la structure de déviation et de découplage (32) comportant une structure de réseau de focalisation configurée pour dévier avec une intensité différente les faisceaux lumineux de la lumière en fonction du site d'incidence et pour disposer en parallèle ou focaliser sur la résine synthétique photosensible (14) du bain de résine synthétique les faisceaux lumineux afin de les découpler à l'extérieur du support.

5. Dispositif d'impression 3D (10) selon l'une des revendications précédentes, dans lequel le dispositif d'éclairage (18) comporte un projecteur avec un photomasque interchangeable, configuré pour établir une caractéristique d'émission formant le modèle d'exposition pour exposer la résine synthétique.

6. Dispositif d'impression 3D (10) selon l'une des revendications précédentes, dans lequel le dispositif d'éclairage (18) comporte un dispositif focal (44) configuré pour émettre des faisceaux lumineux focalisés sur la zone de couplage (22), les faisceaux lumineux focalisés se croisant dans un plan focal dans le bain de résine synthétique (12) après leur transmission à travers le support (20) jusqu'à la zone de découplage (24) et après leur sortie de la zone de découplage (24).

7. Dispositif d'impression 3D (10) selon l'une des revendications précédentes, dans lequel le dispositif d'éclairage (18) comporte un dispositif de balayage (42) avec une source de lumière (36), configuré pour polymériser la résine synthétique photosensible (14) en balayant la zone de couplage en fonction d'une position de balayage du dispositif de balayage.

8. Dispositif d'impression 3D (10) selon l'une des revendications précédentes, dans lequel est en outre prévu un dispositif à caméra (40) agencé à côté du dispositif d'éclairage (18) et configuré pour enregistrer au moins une image d'un état de polymérisation de la résine synthétique en vue d'une surveillance de la photopolymérisation, le dispositif à caméra (40) recevant la lumière de l'image de l'état de polymérisation de la résine synthétique, laquelle lumière est réfléchie dans le dispositif à caméra (40) à partir du bain de résine synthétique (12) à travers la zone de découplage (24), le support (20) et la zone de couplage (22).

9. Dispositif d'impression 3D (10) selon l'une des revendications précédentes, dans lequel le support (20) forme un fond du bain de résine synthétique.
